(19) Europäisches Patentamt / European Patent Office / Office européen des brevets

(11) **EP 2 884 438 A1**

(12) **EUROPEAN PATENT APPLICATION**
published in accordance with Art. 153(4) EPC

(43) Date of publication:
**17.06.2015 Bulletin 2015/25**

(51) Int Cl.:
***G06Q 10/10*** *(2012.01)*

(21) Application number: **13827623.3**

(22) Date of filing: **07.08.2013**

(86) International application number:
**PCT/CN2013/080972**

(87) International publication number:
**WO 2014/023228 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2012 CN 201210282226**

(71) Applicant: **Tencent Technology (Shenzhen) Company Limited**
**Guangdong 518000 (CN)**

(72) Inventors:
• **LIU, Yuewen**
  **Shenzhen**
  **Guangdong 518000 (CN)**
• **CHEN, Chuan**
  **Shenzhen**
  **Guangdong 518000 (CN)**
• **JI, Tashan**
  **Shenzhen**
  **Guangdong 518000 (CN)**
• **HE, Peng**
  **Shenzhen**
  **Guangdong 518000 (CN)**
• **MAI, Junming**
  **Shenzhen**
  **Guangdong 518000 (CN)**
• **LI, Yuhuang**
  **Shenzhen**
  **Guangdong 518000 (CN)**
• **CHEN, Weihua**
  **Shenzhen**
  **Guangdong 518000 (CN)**

(74) Representative: **Mattsson, Niklas**
**Awapatent AB**
**P.O. Box 45 086**
**104 30 Stockholm (SE)**

(54) **METHOD AND DEVICE FOR GROUPING CONTACTS IN SOCIAL NETWORK**

(57)    The present invention applies to an internet technology field. A method and apparatus for dividing contacts into groups are provided according to embodiments of the present invention. In the method, a contact list of a user is obtained. At least one first contact group is obtained according to the obtained contact list. A clustering operation for each of the at least one first contact group is performed to obtain at least one core contact corresponding to the first contact group. At least one recommendation contact corresponding to each of the at least one core contact is determined. A second contact group is established, wherein the second contact group comprises the at least one core contact corresponding to the first contact group and the at least one recommendation contact corresponding to each of the at least one core contact. According to the method, the user can accurately update information of a group of the user on time. Efficiency and accuracy of dividing contacts into groups are improved.

FIG.1

## Description

### Field of the Invention

The present invention relates to an internet technology field, and more particularly, to a method and apparatus for dividing contacts into groups in a social network.

### Background of the Invention

Comparing with a real-name social network, personal information that is filled into a non-real-name social network by users is usually simple, and even not true. The personal information cannot respect real conditions of the users. Thus, it is hard to divided contacts into groups in the non-real-name social network.
In the current non-real-name social network, the users usually divide the contacts into the groups manually. When the number of the contacts is large, efficiency of dividing the contacts into the groups will be low. Moreover, when the users have not divided the contacts into the groups for a long time, certain contacts may not be correctly identified, and accuracy of dividing the contacts into the groups will be deteriorated. For example, certain high school classmates are divided into a group including college classmates.

### Summary of the Invention

A method for dividing contacts into groups are provided according to an embodiment of the present invention so as to solve a problem in the prior that efficiency and accuracy of dividing contacts into groups is low.
A method for dividing contacts into groups includes:

    obtaining a contact list of a user;

    obtaining at least one first contact group according to the obtained contact list;

    performing a clustering operation for each of the at least one first contact group to obtain at least one core contact corresponding to the first contact group;

    determining at least one recommendation contact corresponding to each of the at least one core contact; and

    establishing a second contact group, wherein the second contact group comprises the at least one core contact corresponding to the first contact group and the at least one recommendation contact corresponding to each of the at least one core contact.

Another intention of the present invention is to provide an apparatus for dividing contacts into groups, which includes:

    an information obtaining module, to obtain a contact list of a user, obtain at least one first contact group according to the obtained contact list;

    a core contact obtaining module, to perform a clustering operation for each of the at least one first contact group to obtain at least one core contact corresponding to the first contact group;

    a contact recommendation module, to determine at least one recommendation contact corresponding to each of the at least one core contact; and

    a processing module, to establish a second contact group, wherein the second contact group comprises the at least one core contact corresponding to the first contact group and the at least one recommendation contact corresponding to each of the at least one core contact.

It can be seen from the above technical solution that, in the method, a contact list of a user is obtained. At least one first contact group is obtained according to the obtained contact list. A clustering operation for each of the at least one first contact group is performed to obtain at least one core contact corresponding to the first contact group. At least one recommendation contact corresponding to each of the at least one core contact is determined. A second contact group is established, wherein the second contact group comprises the at least one core contact corresponding to the first contact group and the at least one recommendation contact corresponding to each of the at least one core contact. Thus, contact groups can be automatically updated in time, and the practicability of dividing contacts into groups is improved, efficiency and accuracy of dividing contacts into groups is improved.

### Brief Description of Drawings

In order to make description of embodiments in the present invention clearer, drawings in embodiments of the present invention and prior art are briefly described. Obviously, the following drawings are for a part of embodiments of the present invention. Those skilled in the art can obtain other drawings according to the following drawings without creative labor.

    FIG. 1 is a flowchart illustrating a method for dividing contacts into groups in a social network according to Embodiment 1 of the present invention;

    FIG. 2 is a flowchart illustrating a method for dividing contacts into groups in a social network according to Embodiment 2 of the present invention;

FIG. 3a, 3b, 3c and 3d are schematic diagrams respectively illustrating a method for dividing contacts into groups according to Embodiment 2 of the present invention;

FIG. 4 is a schematic diagram illustrating a rule for configuring recommendation information of a contact according to Embodiment 2 of the present invention;

FIG. 5a is a schematic diagram for an interface for displaying a first contact group according to Embodiment 2 of the present invention;

FIG. 5b is a schematic diagram for an interface for displaying a second contact group according to Embodiment 2 of the present invention;

FIG. 6 is a schematic diagram illustrating an apparatus for dividing contacts into groups in a social network according to Embodiment 3 of the present invention;

FIG. 7 is a schematic diagram illustrating an apparatus for dividing contacts into groups in a social network according to Embodiment 4 of the present invention.

### Detailed Description of the Invention

In order to make the object, technical solution and merits of the present invention clearer, the present invention will be illustrated in detail hereinafter with reference to the accompanying drawings and specific examples. It should be understood that embodiments illustrated hereinafter are intended to explain the present invention, and are not to limit the scope of the present invention.

A technical solution of the present invention is illustrated through embodiments in detail.

Embodiment 1:

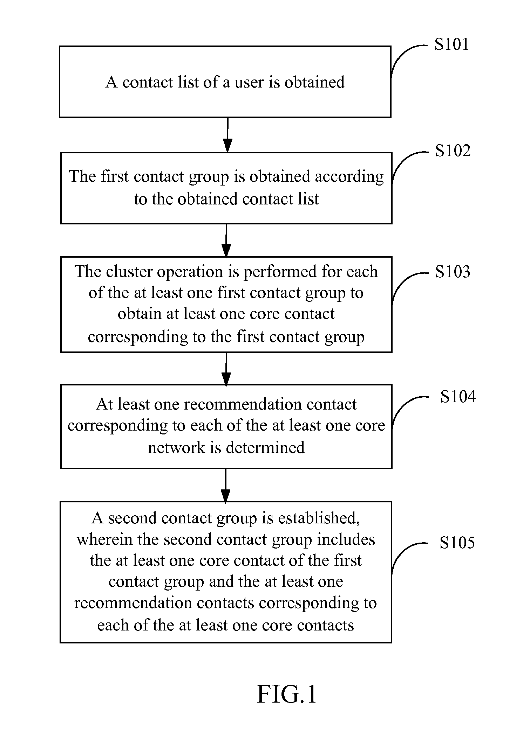

FIG. 1 is a flowchart illustrating a method for dividing contacts into groups in a social network according to Embodiment 1 of the present invention. The method may be implemented by a network device such as a network server, or may be implemented by a computing device such as a personal computer, a smart terminal used by a user. The method includes procedures as follows.

At block S101, a contact list of a user is obtained.

The contact list includes at least one contact. In particular, the contact may be a friend of the user. The contact list of the user may be a friend list of the user.

The contact list includes information related with the at least one contact, e.g., identifier information of the at least one contact, hobby information of the at least one contact. When the at least one contact has already been divided into at least one groups, the contact list may include information of at least one first contact group. Each of the at least one first contact group may include at least one contact. In the contact list, the information of the at least one first contact group may include information of a group to which each of the at least one contact belongs. For example, information related with a certain contact include information "high school group", which represents that the contact belongs to a group "high school group". The contact is one of the first contact group "high school group".

In the embodiment, the contact list may be obtained through any one of ways as follows (but not be limited to the following ways).

In a first way, an information obtaining period is pre-configured (e.g., obtaining the information one time every three day), the contact list of the user is obtained according to the pre-configured information obtaining period.

In a second way, when the number of contacts that have been added into or deleted from the contact list (e.g., a friend list in Facebook, a friend list in a schoolmate network) reaches a preset value (e.g., five contacts), the contact list of the user is obtained.

At block S102, the first contact group is obtained according to the obtained contact list.

In an example, it is determined whether the contact list includes the information of the at least one first contact group. When the contact list includes the information of the first contact group, the at least one first contact group is obtained. Otherwise, the contacts have not been initially divided into groups. Thus, the contacts are to be initially divided into groups at first. In particular, a clustering operation is performed for the contacts in the contact list to obtain at least one class of the contacts. The at least one first contact group is established, wherein each of the at least one first contact group includes a class of the contacts. A clustering algorithm adopted by the clustering operation is similar with that in prior art.

At block S103, the cluster operation is performed for each of the at least one first contact group to obtain at least one core contact corresponding to the first contact group.

A core contact may include a contact closely contacting with the user (e.g., contact frequency of the contact is more than a preset value). The contact frequency may include the number of times that the user contacts with the contact in a time period.

In an example, the contacts in the first contact group are clustered according to the contact frequency. A class of contacts is determined as the at least one core contact, wherein the contact frequency of each of at least one contact in the class is more than a preset value.

At block S104, at least one recommendation contact corresponding to each of the at least one core network is determined.

The at least one recommendation contact may not include any core contact. The at least one recommendation contact corresponding to each of the at least one core contact is determined through one of ways as follows (but not be limited to the following ways).

In a first way, according to the contact list of the user, a contact is determined as a recommendation contact, wherein connection ratio of the at least one core contact is larger than a preset value.

The connection ratio may include a ratio of the number of at least one core contacts respectively having contact relationships with a contact to the number of all of the at least one core contact obtained. For example, the number of the at least one core contact obtained is N. A contact respectively has connection relationships with M core contacts in the N core contacts, and the ratio of M to N $\dfrac{M}{N}$ is not less than a preset value. In an example, the connection relationship may be a friend relationship.

In a second way, in order to recommend more contacts for the user to improve recommendation accuracy, at least one second contact list may be obtained. Each of the at least one second contact list may include at least one contact. At least one contact in the second contact list is determined as the at least one recommendation contact, wherein the connection ratio of each of the at least one contact and the at least one core contact is not less than a preset value. The second contact list may a contact list of a contact in the contact list.

It should be noted that a connection number is different from the connection ratio in the embodiment. The connection number is a static value. The connection ratio is a dynamic value. For example, when the connection number is configured, the connection number may be 6. When the number of the core contacts is equal to 5, even though a contact has the connection relationship with all the core contacts, the contact is not determined as a recommendation contact. When the connection ratio is configured, e.g., 60% and the number of the core contacts is equal to 5, the contact may be determined as the recommendation contact when the contact has the connection relationship with three of the core contacts.

The recommendation contact may be a contact closely contacting with the user, or may be a contact closely contacting with the at least one core contacts.

At block S105, a second contact group is established, wherein the second contact group includes the at least one core contact of the first contact group and the at least one recommendation contacts corresponding to each of the at least one core contacts.

In an example, recommendation information is configured for a contact in the second contact group according to a preset rule.

The recommendation information may include at least one of, but not be limited to, addition, moving-into, retention and removal.

The preset rule may include a rule as follows.

When the contact is not in the second contact group and is in a first contact group corresponding to the second contact group, the recommend information of the contact is configured with removal.

When the contact is in the second contact group and in the first contact group corresponding to the second contact group, the recommend information of the contact is configured with retention.

When the contact is in the second contact group and in the contact list, but is not in the first contact group corresponding to the second contact group, the recommend information of the contact is configured with moving-into.

When the contact is in the second contact group and in the second contact list, but is not in the first contact group corresponding to the second contact group, the recommend information of the contact is configured with addition, wherein the first contact group corresponding to the second contact group may be a first contact group corresponding to the at least one core contacts in the second contact group.

In an example, the contact and the recommendation information corresponding to the contact are displayed. When receiving a recommendation information agreement instruction or a recommendation information rejection instruction, the second contact group is updated according to the instructions.

Embodiment 2:

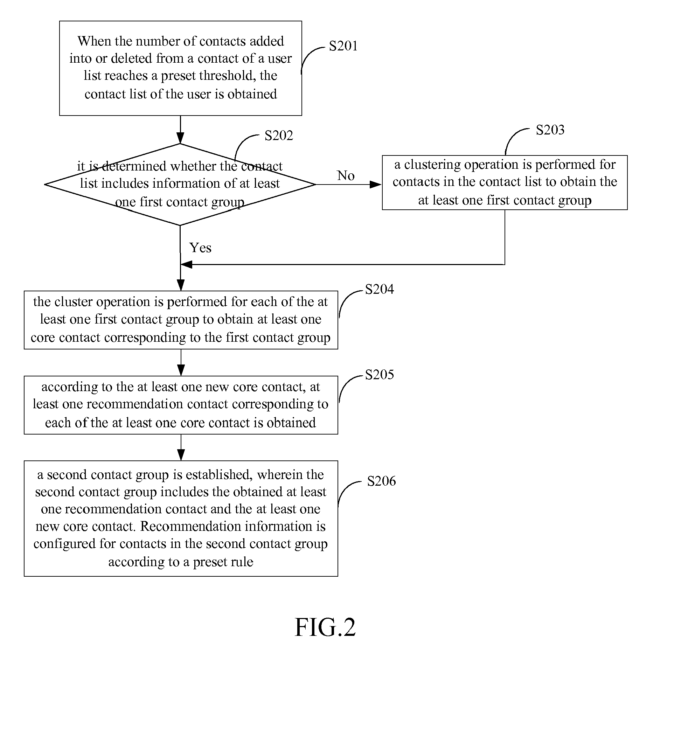

FIG. 2 is a flowchart illustrating a method for dividing contacts into groups in a social network according to Embodiment 2 of the present invention.

At block S201, when the number of contacts added into or deleted from a contact of a user list reaches a preset threshold, the contact list of the user is obtained.

At block S202, according to the obtained contact list, it is determined whether the contact list includes information of at least one first contact group. When the contact list includes information of the at least one first contact group, block S204 is performed. Otherwise, the at least one first contact group is obtained from the contact list, and block S203 is performed.

The information of the at least one first contact group may include information of a group to which each of the at least one contact belongs. For example, information related with a certain contact include information "high school group", which represents the contact belongs to a group "high school group".

At block S203, a clustering operation is performed for contacts in the contact list to obtain the at least one first contact group, wherein each of the at least one first contact group includes at least one contact.

By a clustering algorithm, the clustering operation is performed for the contacts in the contact list according to contact information in the contact list of the user (e.g., hobby, age) to obtain at least one class of the contacts. The at least one first contact group is established, wherein each of the at least one first contact group may include a class of the contacts. The clustering algorithm adopted by the clustering operation is similar with that in prior art.

At block S204, the cluster operation is performed for each of the at least one first contact group to obtain at least one core contact corresponding to the first contact group.

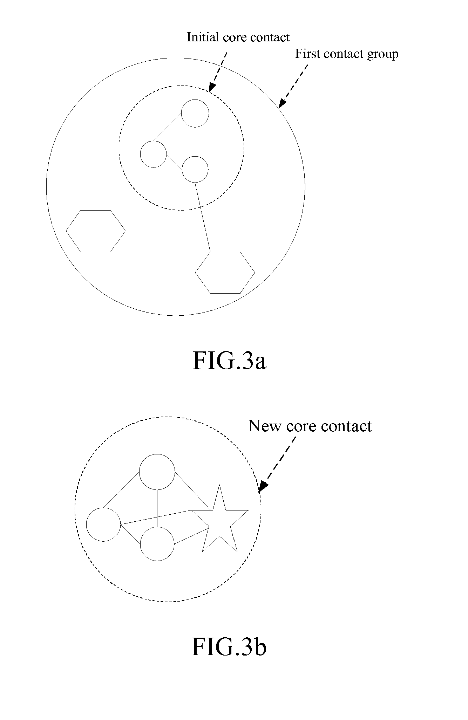

Since the number of the contacts in the contact list is changed, the at least one core contact of the first contact group is needed to be updated. In an example, based on the at least one core contact of the first contact group (as shown in FIG. 3a, the at least one core contact is obtained through a clustering algorithm similar with that in a current social network), a clustering operation is performed for the first contact group to obtain at least one new core contact of each first contact group (as shown in FIG. 3b). A core contact may be a contact closely contacting with the user (e.g., contact frequency of the contact is more than a preset value). An intention of obtaining the at least one core contact is to exclude a condition that a contact that may be in an incorrect group. As shown in FIG. 3a, a node outside a circle with a dotted line is the contact that may be in an incorrect group, e.g., the high school classmate is included in a college group.

At block S205, according to the at least one new core contact, at least one recommendation contact corresponding to each of the at least one core contact is obtained.

A recommendation contact is determined through any one of ways as follows (but not be limited to the following ways).

In a first way, in order to add at least one newly-added contact of the user into a contact group, at least one contact that each of which is in the contact list but is not a new core contact and at least one contact that connection ratio of each of the at least one contact and the at least one new core contact is not less than a preset value is determined as the recommendation contact.

The connection ratio may include a ratio of the number of at least one new core contacts respectively having contact relationships with a contact to the number of all of the at least one new core contacts obtained. For example, the number of all of the at least one new core contacts obtained is N. The contact that is not a new core contact respectively has connection relationships with M new core contacts in the N new core contacts, and the ratio of M to N $\dfrac{M}{N}$ is not less than a preset value.

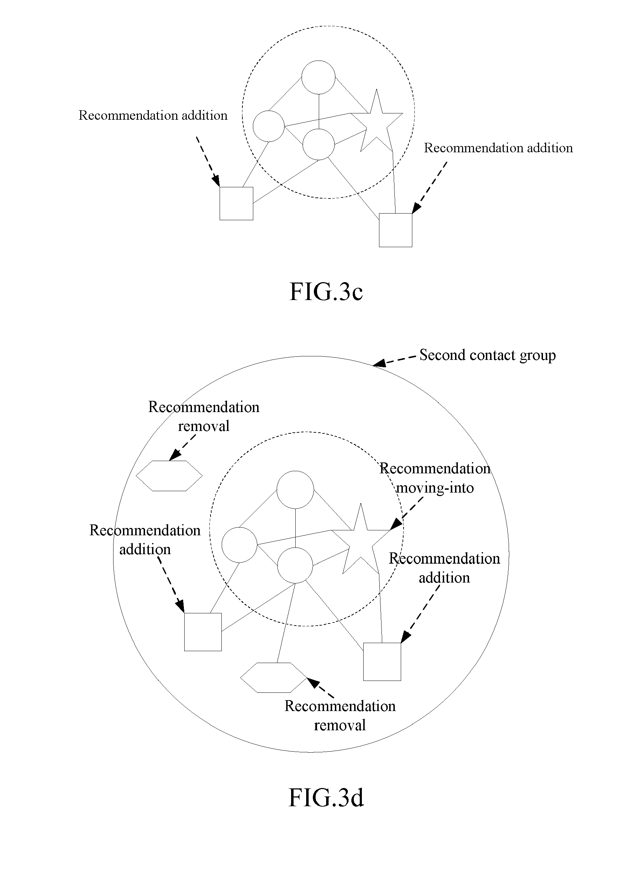

In a second way, in order to recommend more contacts for the user to improve recommendation accuracy, at least one second contact list may be obtained. At least one contact in the second contact list is determined as the at least one recommendation contact, wherein the connection ratio of each of the at least one contact and the at least one core contact is not less than a preset value. As shown in FIG. 3c, a node that is not a core contact is a recommendation contact. The second contact list may a contact list of a contact in the contact list.

It should be noted that a connection number is different from the connection ratio in the embodiment. The connection number is a static value. The connection ratio is a dynamic value. For example, when the connection number is configured, the connection number may be 6. When the number of the core contacts is equal to 5, even though a contact has the connection relationship with all the core contacts, the contact is not determined as a recommendation contact. When the connection ratio is configured, e.g., 60% and the number of the core contacts is equal to 5, the contact may be determined as the recommendation contact when the contact has the connection relationship with three of the core contacts. In an example, the connection relationship may be a friend relationship, i.e., the contact is a friend of a core contact.

At block S206, a second contact group is established, wherein the second contact group includes the obtained at least one recommendation contact and the at least one new core contact. Recommendation information is configured for contacts in the second contact group according to a preset rule (as shown in FIG. 3d, a star node represents a node that the recommendation information is configured with "moving-into", a square node represents a node that the recommendation information is configured with "addition", a hexagon node represents a node that the recommendation information is configured with "removal"). Thus, the contacts in the second contact group can be processed according to the recommendation information.

In an example, the recommendation information may include at least one of, but not be limited to, addition, moving-into, retention and removal. In an example, a contact and recommendation information corresponding to the contact may be displayed in a label manner.

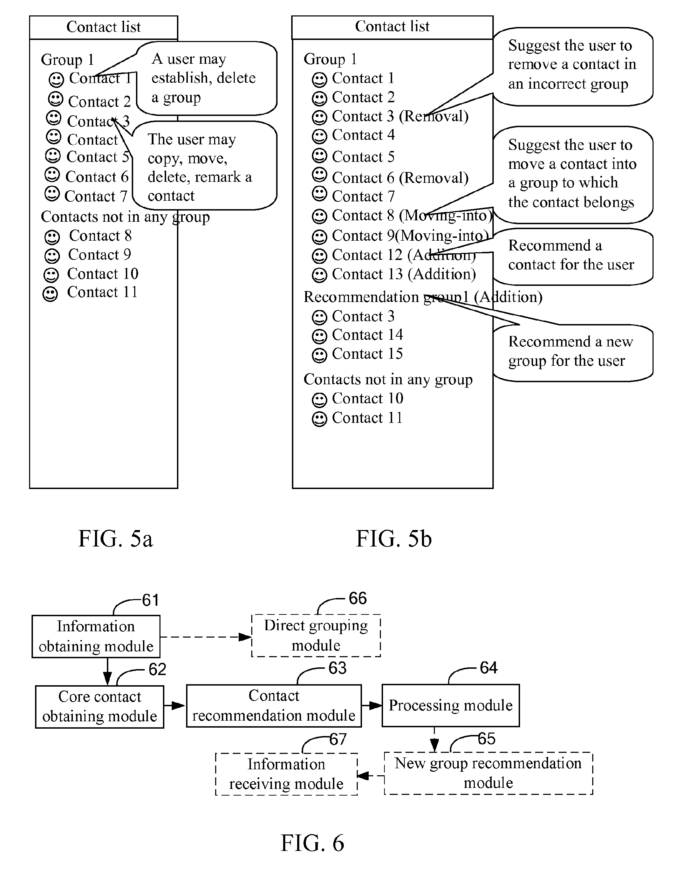

FIG. 5a is a schematic diagram for an interface for displaying a first contact group according to Embodiment 2 of the present invention. When it is determined that a change for contacts in the contact list (increase or decrease) exceeds a preset threshold, a process of updating the contact group in the contact list is triggered to calculate a possible second contact group for a contact and to display the contact and the recommendation information corresponding to the contact. FIG. 5b is a schematic diagram for an interface for displaying a second contact group according to Embodiment 2 of the present invention. In FIG. 5b, the recommendation information of contact 3 and the recommendation information of contact 6 are respectively "removal". The recommendation information of contact 8 and the recommendation information of contact 9 are respectively "moving-into". The recommendation information of contact 12 and the recommendation information of contact 13 are respectively "addition".

The user may indicate agreeing with a recommended operation by transmitting a recommendation information agreement instruction, or may indicate rejecting the recommended operation by transmitting a recommendation information rejection instruction. The recommendation information agreement instruction and the recommendation information rejection instruction may include an identifier of the contact corresponding to the recommendation information.

When the recommendation information rejection instruction transmitted by the user is received, the second contact group is updated.

When the recommendation information of the contact in the command is "addition" or "moving-into", the contact that has been added into the second contact group is deleted from the second contact group.

When the recommendation information of the contact in the command is "removal", the contact that has been deleted from the second contact group is added into the second contact group again.

When the recommendation information of the contact in the command is "retention", the contact is deleted from the second contact group.

According to the recommendation information, the user may select agreeing with or rejecting the operation related with the recommendation information. In an example, the contact and the recommendation information corresponding to the contact may be displayed in a label manner. The second contact group may be changed according to the received the recommendation information agreement instruction or the recommendation information rejection instruction.

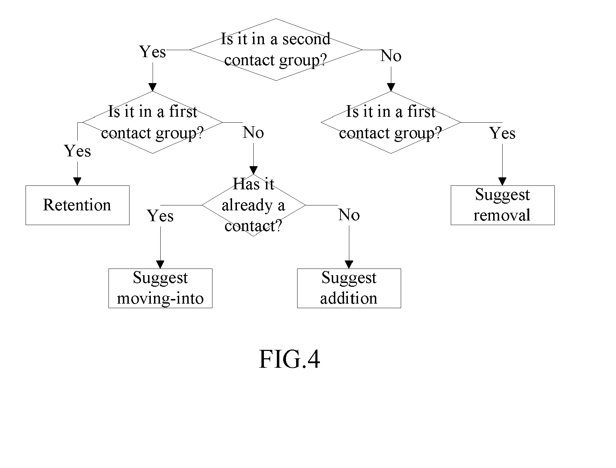

In an example, as shown in FIG. 4, the preset rule includes a rule as follows.

When the contact is not in the second contact group and is in a first contact group corresponding to the second contact group, the recommend information of the contact is configured with removal.

When the contact is in the second contact group and is in the first contact group corresponding to the second contact group, the recommend information of the contact is configured with retention.

When the contact is in the second contact group and the contact list, but is not in the first contact group corresponding to the second contact group, the recommend information of the contact is configured with moving-into (newly adding the contact).

When the contact is in the second contact group and the second contact list, but is not in the first contact group corresponding to the second contact group, the recommend information of the contact is configured with addition. The first contact group corresponding to the second contact group above may be the first contact group corresponding to the at least one core contact in the second contact group.

In another example, in order to enhance practicability and to make management of user information brief, the method further includes procedures as follows.

A clustering operation is performed for contacts that are in the contact list and are not in any one of at least one second contact group. At least one new second contact group is established, wherein each of the at least one new second contact group include a class of the contacts that the number of contacts in the class reaches a preset value. Recommendation information "addition" is configured for each of the at least one new second contact group. The recommendation information and the second contact group are displayed. As shown in FIG. 5b, the recommendation information of group 1 is configured with "addition".

The user may transmit a recommendation information agreement instruction or a recommendation information rejection instruction. The procedures in detail are similar with procedures at block S206, which is not described repeatedly herein.

According to embodiments of the present invention, when the number of contacts added or deleted reaches a preset number, at least one contact group (i.e., at least one first contact group) is automatically updated in time. In a method, a clustering operation is performed for the at least one first contact group to obtain at least one core contact corresponding to each of the at least one first contact group. According to the at least one core contact, at least one recommendation contact is obtained through some ways. Recommendation information for a contact in the second contact group is updated, so that the user may select agreeing with or rejecting an operation corresponding to the recommendation information, management of contact will be convenient. Moreover, since the operation of updating groups is automatically performed in time, efficiency and accuracy of dividing contacts into groups are improved, and practical value is high. In addition, a clustering operation is performed for at least one contact that has not been in any group in the contact list. At least one new second contact group is established, wherein each of the at least one new second contact group includes a class that the number of contacts in the class reach a preset value. Thus, the practicability is improved, management of contacts is convenient for the user, and user experience is improved.

Embodiment 3:

FIG. 6 is a schematic diagram illustrating an apparatus for dividing contacts into groups in a social network according to Embodiment 3 of the present invention. In order to make description clearer, partial blocks related with the present invention are illustrated.

The apparatus for dividing contacts into groups in a social network may be a software unit, hardware unit, or unit combining software with hardware unit running on an information system. Alternatively, the apparatus may be an independent widget integrated into the information system, or integrated into an application system running on the information system.

The apparatus for dividing contacts into groups in a social network includes an information obtaining module 61, a core contact obtaining module 62, a contact recommendation module 63 and a processing module 64.

The information obtaining module 61 is to obtain a contact list of a user, obtain at least one first contact group according to the obtained contact list.

The core contact obtaining module 62 is to perform a clustering operation for each of the at least one first contact group to obtain at least one core contact corresponding to the first contact group.

The contact recommendation module 63 is to determine at least one recommendation contact corresponding to each of the at least one core contact.

The processing module 64 is to establish a second contact group, wherein the second contact group comprises the at least one core contact corresponding to the first contact group and the at least one recommendation contact corresponding to each of the at least one core contact.

When obtaining the at least one first contact group according to the obtained contact list, the information obtaining module is to determine whether the contact list comprises information of the at least one first contact group, obtain the at least one first contact group when the contact list comprises the information of the at least one first contact group, perform the clustering operation for contacts in the contact list, establishing the at least one first contact group, wherein each of the at least one first contact group comprises a class of the contacts.

The contact recommendation module 63 is to determine at least one recommendation contact corresponding to each of the at least one core contact through one of methods as follows.

In a first way, at least one contact in the contact list that connection ratio between the at least one core contact and each of the at least one contact is not less than a preset value is determined as the at least one recommendation contact;

In a second way, at least one second contact list is obtained, at least one contact in the at least one second contact list that connection ratio between the at least one core contact and each of the at least one contact is not less than a preset value is determined as the at least one recommendation contact, wherein the at least one second contact list comprises at least one contact list of contacts in the contact list.

The processing module is further to configure recommendation information for a contact in the second contact group according to a preset rule, display the contact and the recommendation information.

The apparatus further includes:

a new group recommendation module 65, to perform the clustering operation for contacts that is in the contact list and is not in the second contact group, establish at least one new second contact group, wherein each of the at least one new second contact group comprises a class of the contacts that the number of the contact in the class reaches a preset value; and

a direct grouping module 66, to in a condition that the contact list of the user does not include the at least one first contact group, perform the clustering operation for contacts in the contact list to obtain the at least one contact group.

In an example, the recommendation information may include at least one of, but not be limited to, addition, moving-into, retention and removal. In an example, the recommendation information may be displayed in a label manner for the user.

The apparatus further includes an information receiving module 67, to receive a recommendation information agreement instruction or a recommendation information rejection instruction transmitted from the user, update the second contact group according to the recommendation information agreement instruction or the recommendation information rejection instruction.

The preset rule comprises:

When the contact is not in the second contact group and is in a first contact group corresponding to the second contact group, the recommend information of the contact is configured with removal;

When the contact is in the second contact group and in the first contact group corresponding to the second contact group, the recommend information of the contact is configured with retention;

When the contact is in the second contact group and in the contact list, and is not in the first contact group corresponding to the second contact group, the recommend information of the contact is configured with moving-into;

When the contact is in the second contact group and in the second contact list, and is not in the first contact group corresponding to the second contact group, the recommend information of the contact is configured with addition.

The first contact group corresponding to the second contact group includes a first contact group corresponding to the at least one core contact in the second contact group.

The apparatus for dividing contacts into groups in a social network may be used to implement a method for dividing contacts into groups in a social network, which is illustrated in Embodiment 1 and Embodiment 2, which is not described repeatedly herein.

The apparatus may be implemented by a network device such as a network server, or may be implemented by a computing device such as a personal device, a smart terminal used by a user.

Those skilled in the art know that various modules in the apparatus of Embodiment 3 are divided according to functions, but are not limited to be divided as follows. The various modules divided can represent corresponding functions. In addition, names of the various modules are only used for distinguishing from each other, and do not limit a scope of the present invention.

Embodiment 4:

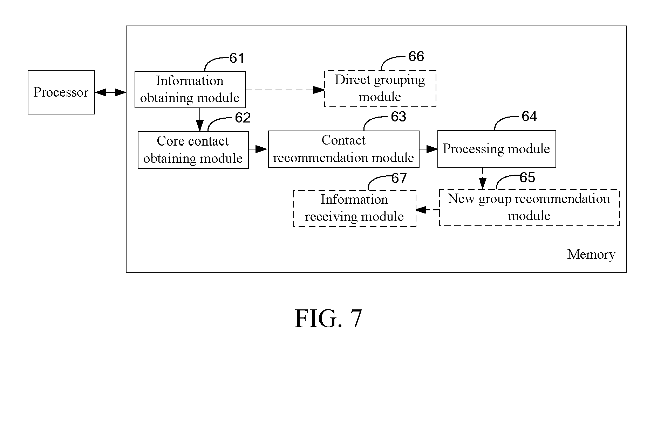

FIG. 7 is a schematic diagram illustrating an apparatus for dividing contacts into groups in a social network according to Embodiment 4 of the present invention. The apparatus at least includes a memory and a processor communicated with the memory, wherein the memory includes an information obtaining instruction, a core contact obtaining instruction, a contact recommendation instruction and a processing instruction.

The information obtaining instruction is to obtain a contact list of a user, obtain at least one first contact group according to the obtained contact list.

The core contact obtaining instruction is to perform a clustering operation for each of the at least one first contact group to obtain at least one core contact corresponding to the first contact group.

The contact recommendation instruction is to determine at least one recommendation contact corresponding to each of the at least one core contact.

The processing instruction is to establish a second contact group, wherein the second contact group includes the at least one core contact corresponding to the first contact group and the at least one recommendation contact corresponding to each of the at least one core contact.

When the at least one first contact group according to the obtained contact list is obtained, the information obtaining instruction is to determine whether the contact list comprises information of the at least one first contact group, obtain the at least one first contact group when the contact list comprises the information of the at least one first contact group, perform the clustering operation for contacts in the contact list, establishing the at least one first contact group, wherein each of the at least one first contact group comprises a class of the contacts.

The contact recommendation instruction is to determine at least one recommendation contact corresponding to each of the at least one core contact through one of methods as follows.

In a first way, at least one contact in the contact list that connection ratio between the at least one core contact and each of the at least one contact is not less than a preset value is determined as the at least one recommendation contact.

In a second way, at least one second contact list is obtained, at least one contact in the at least one second contact list that connection ratio between the at least one core contact and each of the at least one contact is not less than a preset value is determined as the at least one recommendation contact, wherein the at least one second contact list comprises at least one contact list of contacts in the contact list.

The processing instruction is further to configure recommendation information for a contact in the second contact group according to a preset rule, display the contact and the recommendation information.

The apparatus further includes:

a new group recommendation instruction, to perform the clustering operation for contacts that is in the contact list and is not in the second contact group, establish at least one new second contact group, wherein each of the at least one new second contact group comprises a class of the contacts that the number of the contact in the class reaches a preset value; and

a direct grouping instruction, to in a condition that the contact list of the user does not include the at least one first contact group, perform the clustering operation for contacts in the contact list to obtain the at least one contact group.

In an example, the recommendation information may include at least one of, but not be limited to, addition, moving-into, retention and removal. In an example, the recommendation information may be displayed in a label manner for the user.

The apparatus further includes an information receiving instruction, to receive a recommendation information agreement instruction or a recommendation information rejection instruction transmitted from the user, update the second contact group according to the recommendation information agreement instruction or the recommendation information rejection instruction.

The preset rule comprises:

When the contact is not in the second contact group and is in a first contact group corresponding to the second contact group, the recommend information of the contact is configured with removal;

When the contact is in the second contact group and in the first contact group corresponding to the second contact group, the recommend information of the contact is configured with retention;

When the contact is in the second contact group and in the contact list, and is not in the first contact group corresponding to the second contact group, the recommend information of the contact is configured with moving-into;

When the contact is in the second contact group and in the second contact list, and is not in the first contact group corresponding to the second contact group, the recommend information of the contact is configured with addition.

The first contact group corresponding to the second contact group includes a first contact group corresponding to the at least one core contact in the second contact group.

The apparatus for dividing contacts into groups in a social network may be used to implement a method for dividing contacts into groups in a social network, which is illustrated in Embodiment 1 and Embodiment 2, which is not described repeatedly herein.

It can be seen from the above that, according to embodiments of the present invention, when the number of contacts added or deleted reaches a preset number or a preset information obtaining period of the contact list is reached, in a condition that the contact list includes at least first contact group, the at least one first contact group is automatically updated in time. In a method, a clustering operation is performed for each of the at least one first contact group to obtain at least one core contact corresponding to each of the at least one first contact group. According to the at least one core contact, at least one recommendation contact is obtained through some ways. A second contact group is established, which includes the obtained at least one recommendation contact and the at least one core contact corresponding to the first contact group. Recommendation information for a contact in the second contact group is updated, so that the user may select agreeing with or rejecting an operation corresponding to the recommendation information, management of contact will be convenient. Moreover, since the operation of updating groups is automatically performed in time, efficiency and accuracy of dividing contacts into groups are improved, and practical value is high. In addition, a clustering operation is performed for at least one contact that has not been in any group in the contact list. At least one new second contact group is established, wherein each of the at least one new second contact group includes a class that the number of contacts in the class reach a preset value. Thus, the practicability is improved, management of contacts is convenient for the user, and user experience is improved.

Those skilled in the art know that all or part of steps of a method of embodiments may be implemented through related hardware instructed by program. The program may be stored in a computing readable storage medium, which includes ROM/RAM, a disk, an optical disk etc.

The foregoing is only preferred embodiments of the present invention and is not used to limit the protection scope of the present invention. For those skilled in the art, any equivalent substitution and improvement without departing from the spirit and principle of the present invention and having a same performance or purpose are within the protection scope of the present invention.

## Claims

1. A method for dividing contacts into groups in a social network, comprising:

   obtaining a contact list of a user;
   obtaining at least one first contact group according to the obtained contact list;
   performing a clustering operation for each of the at least one first contact group to obtain at least one core contact corresponding to the first contact group;
   determining at least one recommendation contact corresponding to each of the at least one core contact; and
   establishing a second contact group, wherein the second contact group comprises the at least one core contact corresponding to the first contact group and the at least one recommendation contact corresponding to each of the at least one core contact.

2. The method of claim 1, wherein obtaining the at least one first contact group according to the obtained contact list comprises:

   determining whether the contact list comprises information of the at least one first contact group;
   obtaining the at least one first contact group when the contact list comprises the information of the at least one first contact group;
   performing the clustering operation for contacts in the contact list, establishing the at least one first contact group, wherein each of the at least one first contact group comprises a class of the contacts.

3. The method of claim 1, wherein determining at least one recommendation contact corresponding to each of the at least one core contact through one of methods as follows:

   determining at least one contact in the contact list that connection ratio between the at least one core contact and each of the at least one contact is not less than a preset value as the at least one recommendation contact;
   obtaining at least one second contact list, determining at least one contact in the at least one second contact list that connection ratio between the at least one core contact and each of the at least one contact is not less than a preset value as the at least one recommendation contact, wherein the at least one second contact list comprises at least one contact list of contacts in the contact list.

4. The method of any of claims 1-3, further comprising:

   configuring recommendation information for a contact in the second contact group according to a preset rule;
   displaying the contact and the recommendation information;
   receiving a recommendation information agreement instruction or a recommendation information rejection instruction transmitted from the user;
   updating the second contact group according to the recommendation information agreement instruction or the recommendation information rejection instruction.

5. The method of claim 4, wherein the preset rule comprises:

   the recommend information of the contact is configured with removal when the contact is not in the second contact group and is in a first contact group corresponding to the second contact group;
   the recommend information of the contact is configured with retention when the contact is in the second contact group and in the first contact group corresponding to the second contact group;
   the recommend information of the contact is configured with moving-into when the contact is in the second contact group and in the contact list, and is not in the first contact group corresponding to the second contact group;
   the recommend information of the contact is configured with addition when the contact is in the second contact group and in the second contact list, and is not in the first contact group corresponding to the second contact group, wherein the first contact group corresponding to the second contact group comprises a first contact group corresponding to the at least one core contact in the second contact group.

6. The method of claim 1, further comprising:

   performing the clustering operation for contacts that is in the contact list and is not in the second contact group;
   establishing at least one new second contact group, wherein each of the at least one new second contact group comprises a class of the contacts that the number of the contact in the class reaches a preset value.

7. An apparatus for dividing contacts into groups in a social network, comprising:

   an information obtaining module, to obtain a contact list of a user, obtain at least one first contact group according to the obtained contact list;
   a core contact obtaining module, to perform a clustering operation for each of the at least one first contact group to obtain at least one core contact corresponding to the first contact group;
   a contact recommendation module, to determine at least one recommendation contact corresponding to each of the at least one core contact; and
   a processing module, to establish a second contact group, wherein the second contact group comprises the at least one core contact corresponding to the first contact group and the at least one recommendation contact corresponding to each of the at least one core contact.

8. The apparatus of claim 7, wherein the information obtaining module is to determine whether the contact list comprises information of the at least one first contact group, obtain the at least one first contact group when the contact list comprises the information of the at least one first contact group, perform the clustering operation for contacts in the contact list, establishing the at least one first contact group, wherein each of the at least one first contact group comprises a class of the contacts.

9. The apparatus of claim 7, wherein the contact recommendation module is to determine at least one recommendation contact corresponding to each of the at least one core contact through one of methods as follows:

   determining at least one contact in the contact list that connection ratio between the at least one core contact and each of the at least one contact is not less than a preset value as the at least one recommendation contact;
   obtaining at least one second contact list, determining at least one contact in the at least one second contact list that connection ratio between the at least one core contact and each of the at least one contact is not less than a preset value as the at least one recommendation contact, wherein the at least one second contact list comprises at least one contact list of contacts in the contact list.

10. The apparatus of any of claims 7-9, wherein the processing module is further to configure recommendation information for a contact in the second contact group according to a preset rule, display the contact and the recommendation information.

**11.** The apparatus of claim 10, wherein the preset rule comprises:

the recommend information of the contact is configured with removal when the contact is not in the second contact group and is in a first contact group corresponding to the second contact group;

the recommend information of the contact is configured with retention when the contact is in the second contact group and in the first contact group corresponding to the second contact group;

the recommend information of the contact is configured with moving-into when the contact is in the second contact group and in the contact list, and is not in the first contact group corresponding to the second contact group;

the recommend information of the contact is configured with addition when the contact is in the second contact group and in the second contact list, and is not in the first contact group corresponding to the second contact group, wherein the first contact group corresponding to the second contact group comprises a first contact group corresponding to the at least one core contact in the second contact group.

**12.** The apparatus of claim 7, further comprising:

a new group recommendation module, to perform the clustering operation for contacts that is in the contact list and is not in the second contact group, establish at least one new second contact group, wherein each of the at least one new second contact group comprises a class of the contacts that the number of the contact in the class reaches a preset value.

**13.** The apparatus of claim 10, further comprising:

an information receiving module, to receive a recommendation information agreement instruction or a recommendation information rejection instruction transmitted from the user, update the second contact group according to the recommendation information agreement instruction or the recommendation information rejection instruction.

```
                                                            ┌─ S101
┌─────────────────────────────────────────┐   /
│                                           │  /
│     A contact list of a user is obtained  │
│                                           │
└─────────────────────────────────────────┘
                      │
                      ▼
                                                            ┌─ S102
┌─────────────────────────────────────────┐   /
│  The first contact group is obtained according │
│        to the obtained contact list       │
└─────────────────────────────────────────┘
                      │
                      ▼
                                                            ┌─ S103
┌─────────────────────────────────────────┐   /
│  The cluster operation is performed for each │
│   of the at least one first contact group to │
│       obtain at least one core contact     │
│   corresponding to the first contact group │
└─────────────────────────────────────────┘
                      │
                      ▼
                                                            ┌─ S104
┌─────────────────────────────────────────┐   /
│   At least one recommendation contact      │
│ corresponding to each of the at least one core │
│          network is determined            │
└─────────────────────────────────────────┘
                      │
                      ▼
┌─────────────────────────────────────────┐
│   A second contact group is established,   │
│  wherein the second contact group includes │   ┌─ S105
│     the at least one core contact of the first │  /
│     contact group and the at least one    │
│  recommendation contacts corresponding to  │
│  each of the at least one core contacts    │
└─────────────────────────────────────────┘
```

FIG.1

When the number of contacts added into or deleted from a contact of a user list reaches a preset threshold, the contact list of the user is obtained — S201

it is determined whether the contact list includes information of at least one first contact group — S202

No → a clustering operation is performed for contacts in the contact list to obtain the at least one first contact group — S203

Yes

the cluster operation is performed for each of the at least one first contact group to obtain at least one core contact corresponding to the first contact group — S204

according to the at least one new core contact, at least one recommendation contact corresponding to each of the at least one core contact is obtained — S205

a second contact group is established, wherein the second contact group includes the obtained at least one recommendation contact and the at least one new core contact. Recommendation information is configured for contacts in the second contact group according to a preset rule — S206

FIG.2

FIG.3a

FIG.3b

FIG.3c

FIG.3d

FIG.4

## FIG. 5a

Contact list

Group 1
- ☺ Contact 1
- ☺ Contact 2
- ☺ Contact 3
- ☺ Contact 4
- ☺ Contact 5
- ☺ Contact 6
- ☺ Contact 7

Contacts not in any group
- ☺ Contact 8
- ☺ Contact 9
- ☺ Contact 10
- ☺ Contact 11

A user may establish, delete a group

The user may copy, move, delete, remark a contact

## FIG. 5b

Contact list

Group 1
- ☺ Contact 1
- ☺ Contact 2
- ☺ Contact 3 (Removal)
- ☺ Contact 4
- ☺ Contact 5
- ☺ Contact 6 (Removal)
- ☺ Contact 7
- ☺ Contact 8 (Moving-into)
- ☺ Contact 9(Moving-into)
- ☺ Contact 12 (Addition)
- ☺ Contact 13 (Addition)

Recommendation group1 (Addition)
- ☺ Contact 3
- ☺ Contact 14
- ☺ Contact 15

Contacts not in any group
- ☺ Contact 10
- ☺ Contact 11

Suggest the user to remove a contact in an incorrect group

Suggest the user to move a contact into a group to which the contact belongs

Recommend a contact for the user

Recommend a new group for the user

FIG. 6

61 Information obtaining module

66 Direct grouping module

62 Core contact obtaining module

63 Contact recommendation module

64 Processing module

67 Information receiving module

65 New group recommendation module

FIG. 7

<table>
<tr><td colspan="2"><h2>INTERNATIONAL SEARCH REPORT</h2></td><td>International application No.<br><br>**PCT/CN2013/080972**</td></tr>
</table>

**A.   CLASSIFICATION OF SUBJECT MATTER**

G06F 17/30 (2006.01) i

According to International Patent Classification (IPC) or to both national classification and IPC

**B.   FIELDS SEARCHED**

Minimum documentation searched (classification system followed by classification symbols)

IPC: G06F; H04L

Documentation searched other than minimum documentation to the extent that such documents are included in the fields searched

Electronic data base consulted during the international search (name of data base and, where practicable, search terms used)

WPI, EPODOC, CNPAT: Social Networking, social network site, microblog, instant messaging, user, classify, cluster, aggregation, category, commonly used, frequentness, connect, facebook, SNS, IM, group+, recommend+, core, important, primary, active, frequency, social, network+, contact+, friend

**C.   DOCUMENTS CONSIDERED TO BE RELEVANT**

| Category* | Citation of document, with indication, where appropriate, of the relevant passages | Relevant to claim No. |
|---|---|---|
| A | CN 101951426 A (YULONG COMPUTER TELECOMMUNICATION SCIENTIFIC (SHENZHEN) CO., LTD.), 19 January 2011 (19.01.2011), the whole document | 1-13 |
| A | CN 101562649 A (SHENZHEN HUAWEI COMMUNICATION TECHNOLOGIES CO., LTD.), 21 October 2009 (21.10.2009), the whole document | 1-13 |
| A | CN 102457812 A (CHINA MOBILE GROUP BEIJING CO., LTD.), 16 May 2012 (16.05.2012), the whole document | 1-13 |
| A | WO 2012044025 A2 (SAMSUNG ELECTRONICS CO., LTD.), 05 April 2012 (05.04.2012), the whole document | 1-13 |

☐ Further documents are listed in the continuation of Box C.        ☒ See patent family annex.

| | |
|---|---|
| *        Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 21 October 2013 (21.10.2013) | **14 November 2013 (14.11.2013)** |

| Name and mailing address of the ISA/CN:<br> State Intellectual Property Office of the P. R. China<br> No. 6, Xitucheng Road, Jimenqiao<br> Haidian District, Beijing 100088, China<br> Facsimile No.: (86-10) 62019451 | Authorized officer<br><br>**FEI, Yuhui**<br><br>Telephone No.: (86-10) **62413198** |

Form PCT/ISA/210 (second sheet) (July 2009)

**INTERNATIONAL SEARCH REPORT**
Information on patent family members

International application No.

**PCT/CN2013/080972**

| Patent Documents referred in the Report | Publication Date | Patent Family | Publication Date |
|---|---|---|---|
| CN 101951426 A | 19.01.2011 | None | |
| CN 101562649 A | 21.10.2009 | None | |
| CN 102457812 A | 16.05.2012 | None | |
| WO 2012044025 A2 | 05.04.2012 | US 2012079022 A1 | 29.03.2012 |
| | | EP 2622563 A2 | 07.08.2013 |
| | | KR 20120032251 A | 05.04.2012 |
| | | CN 103140869 A | 05.06.2013 |

Form PCT/ISA/210 (patent family annex) (July 2009)